# DEMANDE DE BREVET EUROPEEN

(11) **EP 1 441 125 A1**
(43) Date de publication de la demande: **28.07.2004**
(21) Numéro de dépôt: 04447016.9
(22) Date de dépôt: 21.01.2004
(51) Int. Cl.: F03B 13/08, E02B 7/18

(54) **Turbine hydraulique siphonée**

(30) Priorité: 23.01.2003 FR 0300736
(71) Demandeur: RUTTEN S.A., B-4040 Herstal (BE)
(72) Inventeur: Rutten, Jean, 4671 Blégny (BE)
(74) Mandataire: Powis de Tenbossche, Roland

(57) **Abrégé**

Unité hydraulique mobile comprenant :
- un ensemble support (2);
- une enveloppe (7) pour le passage d'eau;
- un arbre rotatif (11) entraînant un alternateur ;
- une turbine (11A) montée sur l'arbre rotatif (11), et
- un moyen d'appui amovible (21,22) entre une position d'appui et une position de non-appui, la position d'appui étant une position s'opposant à un enfoncement et à un tangage de l'ensemble support.

## Description

La présente invention a pour objet une turbine et une unité hydraulique, en particulier flottante pour générer une énergie hydroélectrique, au voisinage d'un barrage sur un cours d'eau créant une faible différence de niveaux.

Pour des barrages de faible différence de niveaux, il n'est économiquement pas possible d'effectuer des travaux de génie civil pour le placement de turbine pour générer de l'énergie hydroélectrique.

Pour pouvoir récupérer l'énergie potentielle de tels barrages, on a donc cherché une unité hydroélectrique ne nécessitant pas ou sensiblement pas de travaux de génie civil et apte à pouvoir être placée sur des barrages existants à faible hauteur de chute.

On a ainsi pensé à des unités hydroélectriques montées sur un ou des flotteurs.

Des unités hydroélectriques montées sur des flotteurs ont déjà été décrites dans la littérature.

On a déjà proposé sur papier des unités hydroélectriques comportant un flotteur amont sur lequel est monté un canal associé à une turbine. Des problèmes liés à de telles unités hydroélectriques sont des problèmes d'amorçage, par exemple dus à des mouvements du flotteur pouvant amener la sortie du canal hors de l'eau, et/ou des problèmes de stabilité liés à des vagues et/ou à un désiphonage du canal et/ou au poids d'eau dans la sortie du canal.

On connaît par exemple par le document US 4,117,676 un flotteur portant à une de ses extrémités une turbine associée à un conduit se terminant par un divergent, ledit conduit étant destiné à faire passer de l'eau du côté amont du barrage vers le côté aval de ce barrage. Le flotteur est associé à une série de pieds. L'enfoncement du flotteur se fait par la réduction de la flottaison des flotteurs par le remplacement d'air de chambres de flottaison par de l'eau.
Vu la position extrême de la turbine et du divergent, le flotteur doit avoir un poids suffisant pour reprendre le poids d'eau contenu dans le conduit et le divergent. L'eau présente dans les chambres de flottaison immergées ne contribuant pas à reprendre ce poids, le flotteur doit donc avoir en tant que tel un poids d'acier correspondant sensiblement au poids d'eau dans le conduit et le divergent. Ceci rend cette construction très lourde, volumineuse pour permettre une flottabilité malgré la lourdeur de la construction, difficile à placer près de petits barrages, peu maniable, et coûteuse. Au vu de ces inconvénients, l'homme du métier se tournera alors vers la construction d'un barrage en béton.

Par le document DE 296 17 318, on connaît une unité hydraulique flottante comportant un flotteur portant une turbine horizontale montée dans un conduit muni d'un convergent articulé, de manière à faciliter le placement du divergent du côté aval du barrage. L'unité représentée dans ce document n'est pas à même de fonctionner, puisque, dès que le divergent sera rempli d'eau, l'unité va subir un mouvement de pivotement tendant à abaisser le divergent vers le fond de la rivière, d'où l'écrasement du barrage, voire sa destruction. Un tel pivotement entraînera également le soulèvement de la partie du conduit située du côté amont, ce qui provoquera alors la sortie de l'extrémité libre du conduit côté amont, d'où un désyphonage du côté amont, ceci entraînant alors l'arrêt de la turbine et des mouvements de balancement de l'unité.

On connaît aussi par le document US 4,540,313 une unité hydraulique associée à un flotteur ou barge amont et à un flotteur ou barge aval. Cette unité hydraulique est inapte à fonctionner correctement, car la conduite amenant le fluide amont vers la partie aval du barrage n'est pas articulée, de sorte que toute différence de mouvement vertical entre les flotteurs amonts et avals va créer des efforts trop importants dans la conduite. Même la présence d'un joint flexible entre deux parties de la conduite n'est pas à même de reprendre des différences importantes de niveaux. De plus. l'élément générateur de l'énergie hydroélectrique se trouve dans un tronçon horizontal de la conduite, situé sous le niveau aval de l'eau.

Etant donné que l'unité hydraulique selon US 4,503,313 était inapte à fonctionner, le même demandeur a proposé dans son brevet US 4,746,244 une unité hydraulique dont la conduite d'amenée du fluide vers un élément générateur est articulée au flotteur ou barge amont et au flotteur ou barge aval. Cette unité comporte une conduite de grande dimension et de grande longueur, de sorte que sa réalisation technique est impossible. L'unité représentée comporte une tubulure de dimension telle qu'elle doit contenir environ 500 tonnes d'eau. Le poids total d'une telle installation (conduite remplie d'eau) sera donc de 1000 tonnes au minimum. La perte de charge créée dans la conduite sera importante, de sorte qu'une partie importante du ΔH (différence de niveau d'eau entre le côté amont et le côté aval) sera perdue pour compenser la perte de charge. Vu le poids d'une telle installation et les pertes de charges, l'homme du métier examinant le document US 4,746,244 en déduira que d'un point de vue économique et technique (coût de l'installation, rendement de l'installation, complexité de placement), il est préférable de construire une installation fixe et d'avoir une hauteur de chute importante.

Pour éviter la cavitation, c'est-à-dire le décollement de la veine fluide des aubages ou aubes d'une turbine et des problèmes de corrosion ( par exemple par la libération de l'oxygène ou de l'ozone présent dans l'eau, libération ayant lieu au voisinage de la face de l'aube en dépression), il est connu de réaliser des turbines particulières pour chaque cas particulier, cette turbine particulière étant étudiée en fonction du débit, du ΔH du cours d'eau ou de la rivière au niveau du barrage.

Après une étude des machines proposées, au vu des problèmes d'équilibrage et de non-amorçage et/ou au vu des tuyauteries absolument hors proportion, en longueur et poids, devant des projets flottants aussi onéreux, l'homme du métier s'est détourné de réaliser des unités mobiles produisant de l'énergie électrique à partir de barrage ou chute de faible hauteur, telle par exemple des chutes de moins de 8 mètres de hauteur.

Un premier objet de l'invention est donc une unité hydroélectrique mobile. avantageusement flottante ou partiellement flottante ou apte à être rendue flottante, de conception nouvelle et simple et qui permet de réduire sensiblement les poids d'acier en jeu et d'annuler quasi totalement le travail de génie civil. Les aubages de la turbine (fixes et/ou variables) seront avantageusement calculés de manière à optimiser le rendement global de la turbine. L'unité selon l'invention sera particulièrement stable en fonctionnement et/ou lors d'un arrêt brutal de fonctionnement. Selon une forme de réalisation préférée, l'unité selon l'invention ne comprendra pas de réservoirs de stabilisation destinés à être remplis d'eau.

La présente invention a donc pour objet une unité hydraulique mobile flottante ou apte à être rendue flottante, pour générer une énergie hydroélectrique à partir d'une énergie au moins potentielle créée par un barrage sur un cours d'eau créant une différence de niveaux (delta H) de moins de 8 mètres entre le niveau supérieur du côté amont du cours d'eau par rapport au barrage et le niveau supérieur du côté aval du cours d'eau par rapport au barrage, le niveau supérieur aval étant situé en dessous du niveau supérieur amont, cette unité comprenant :
- au moins un ensemble support amont flottant, partiellement flottant ou apte à être rendu flottant et destiné à être placé du côté amont du barrage, ledit support flottant présentant une extrémité dirigée à être tournée vers le barrage et au moins un moyen d'appui destiné à prendre appui sur le fond du cours d'eau côté amont, ce moyen définissant une base de sustentation;
- une enveloppe définissant un canal pour le passage d'eau entre une entrée et une sortie, ledit canal présentant un axe (A-A) correspondant au moins sensiblement à la direction d'écoulement d'eau dans le canal, ledit canal présentant en outre un coude adapté pour être situé au-dessus du niveau supérieur amont ;
- un arbre rotatif par rapport à l'enveloppe, ledit arbre rotatif étant destiné à entraîner un alternateur; et
- une turbine montée sur l'arbre rotatif, ladite turbine étant avantageusement située au voisinage de l'entrée du canal destinée à être placée du côté amont du barrage,
ladite enveloppe, l'arbre rotatif et ladite turbine formant un ensemble, ce dernier présentant un premier centre de gravité lorsque l'enveloppe n'est pas remplie d'eau et un deuxième centre de gravité lorsque l'enveloppe est remplie d'eau.
Selon l'invention, l'unité est caractérisée en ce que la projection verticale du deuxième centre de gravité de l'ensemble formé par l'enveloppe remplie d'eau, l'arbre et la turbine est située sensiblement dans la base de sustentation, de préférence dans la base de sustentation. Ceci facilite la stabilisation de l'unité et/ou assure une excellente stabilité à l'unité.
La base de sustentation est la surface (du fond) dont le contour correspond au polygone (dans le cas d'un fond sensiblement plat) ou à la forme qui est obtenu en joignant les points d'appui de l'unité sur le fond. Par sensiblement dans la base de sustentation on entend une projection verticale du deuxième centre de gravité qui est située dans une zone dont le contour est distant et plus grand d'au maximum 10cm, de préférence d'au maximum 5 cm, de la base de sustentation définie par les pieds.

Dans une forme de réalisation préférée, la projection verticale du premier centre de gravité et du deuxième centre de gravité de l'ensemble sont situées dans la base de sustentation.
Ceci permet d'assurer une excellente stabilité pour l'unité lors de son déplacement par flottaison, mais surtout lors de son utilisation pour la production d'énergie hydroélectrique.

Selon une forme de réalisation préférée, l'unité ne comporte pas de réservoir(s) d'appoint destiné(s) à être rempli(s) d'eau pour assurer une stabilité de l'unité avec l'enveloppe remplie d'eau.
Selon un détail d'une forme de réalisation avantageuse, la projection verticale de l'entrée de l'enveloppe et la projection verticale de la sortie sont situées hors de la base de sustentation définie par au moins trois pieds, de préférence au moins quatre pieds, situés en amont du barrage et entre l'entrée et la sortie de l'enveloppe.

Selon une particularité avantageuse, le ou les moyens d'appui sont associés à ou sont aptes à être associés à un moyen apte à soulever au moins l'ensemble support avec le canal non rempli d'eau, de préférence l'ensemble support avec le canal rempli d'eau. Ceci permet d'assurer une excellente stabilité à l'unité lors du remplissage de l'enveloppe, lors du fonctionnement de la turbine, mais également lors d'une opération de désiphonnage brutal de l'enveloppe.
Les moyens d'appui seront aptes à supporter l'ensemble support avec le canal rempli d'eau.

L'unité mobile (sans eau dans l'enveloppe) suivant l'invention peut être amenée à un barrage ou enlevée d'un barrage au moyen de l'ensemble support flottant ou d'un ensemble support partiellement flottant ou non flottant, rendu flottant par un ou des flotteurs supplémentaires (par exemple attachés de manière temporaire) et une ou barges flottantes supplémentaires, etc., ou d'une combinaison de ceux-ci. Lorsque l'enveloppe ou canal est rempli d'eau, le poids de l'unité est avantageusement de 2 à 5 fois le poids de l'unité à vide, en particulier environ le double du poids de l'unité à vide. Une fois l'enveloppe chargée en eau, toute modification du niveau d'eau jusqu'au niveau maximal admissible côté amont ne provoquera pas de soulèvement de l'unité, ce qui rendra l'unité particulièrement stable.
Si pour des unités de petite puissance, il est pensable de placer la turbine dans le conduit situé entre le coude d'entrée et le coude de sortie ou après le coude de sortie, il est préférable de placer la turbine au voisinage de l'entrée pour des unités de petite puissance et de grande puissance.

Lorsque le canal est rempli d'eau, par l'effet de la différence de niveau entre l'entrée (côté amont) et la sortie (côté aval) du canal, l'eau continue à être aspirée du côté amont vers le côté aval. Ce courant d'eau entre le côté amont du barrage et le côté aval du barrage entraîne alors en rotation le rotor, et dès lors l'arbre sur lequel est monté un système alternateur pour produire de l'énergie électrique.

Selon une forme de réalisation avantageuse, l'assiette ou inclinaison longitudinale de l'unité est sensiblement semblable pour l'unité avec l'enveloppe remplie d'eau prenant appui sur la base ou le fond du barrage et pour l'unité avec l'enveloppe non remplie d'eau prenant appui sur la base ou le fond du barrage, mais en particulier pour l'unité avec l'enveloppe remplie d'eau prenant appui sur la base ou le fond du barrage et pour l'unité rendue flottante avec l'enveloppe non remplie d'eau. Cette assiette est avantageusement sensiblement horizontale, c'est-à-dire que l'inclinaison longitudinale est sensiblement nulle.

Le moyen d'appui est avantageusement réglable, mobile ou amovible par rapport à l'ensemble support, ceci pour assurer qu'en position de non-appui, le moyen permet le déplacement par flottaison de l'unité

Le ou les moyens d'appui mobiles ou amovibles de l'unité s'opposent à un pivotement et/ou tangage de l'enveloppe ou de l'unité lors du remplissage de l'enveloppe et/ou lors de la vidange de celle-ci et/ou lors du fonctionnement de la turbine. Le moyen d'appui permet par exemple un équilibre de l'unité permettant son fonctionnement malgré le poids d'eau en porte à faux, mais permettant aussi l'amorçage du siphon.

Selon une forme de réalisation. ledit moyen d'appui comporte au moins quatre pieds d'appui montés sur l'ensemble flotteur, lesdits pieds étant avantageusement des vérins d'assiette par exemple placés sensiblement aux coins de l'ensemble flotteur.
De préférence, ledit moyen d'appui est associé à ou est apte à être associé à un moyen apte à soulever au moins l'ensemble support avec le canal ou enveloppe non rempli d'eau, de préférence au moins l'ensemble support avec le canal ou enveloppe rempli d'eau. Le moyen d'appui prend avantageusement appui sur le fond amont adjacent du barrage. Le moyen pour soulever l'ensemble permet ainsi d'assurer une force ou poussée minimale des pieds sur le fond adjacent du barrage correspondant au volume d'eau égal au volume de l'unité déplacé au dessus de la ligne de flottaison de l'unité ne prenant pas appui sur le fond.

De préférence, la turbine est agencée dans une partie du canal située côté amont du barrage (B), en particulier entre un niveau compris entre les niveaux situés sous le niveau d'eau amont (N1) du barrage et un niveau situé au-dessus du niveau d'eau amont mais adjacent de ce niveau d'eau amont lors de la production d'énergie électrique, ladite turbine étant rotative par rapport à un axe formant avantageusement un angle compris entre 0 et 60° par rapport à un axe vertical. En particulier, la turbine est rotative par rapport à un axe sensiblement vertical. Par exemple, la turbine est de préférence située à un niveau en dessous de N1 (niveau d'eau amont du barrage), mais supérieur à N2 (niveau d'eau aval du barrage).

Selon une forme particulière, le canal présente deux portions en porte à faux par rapport à l'ensemble support, en particulier flotteur, une première portion comportant l'entrée du canal, tandis que la deuxième portion comporte la sortie du canal. Le rotor est avantageusement placé dans la première portion, tandis que l'alternateur est avantageusement fixé sur cette portion.

Selon un détail avantageux, l'unité suivant l'invention comporte un flotteur ou un ensemble flotteur destiné à être placé du côté amont du barrage, ledit flotteur ou ensemble flotteur étant apte à flotter lorsque l'enveloppe n'est pas remplie d'eau. Ceci est particulièrement intéressant pour le placement de l'unité au voisinage d'un barrage car le déplacement de l'unité est plus aisé du côté amont du barrage, vu la plus grande profondeur de la rivière du côté amont du barrage.

Selon une particularité d'une forme de réalisation, l'enveloppe comporte un tronçon de canal sensiblement horizontal auquel sont attachés un divergent de sortie et une entrée, ladite enveloppe étant montée rotative autour d'un axe sensiblement horizontal par rapport à l'ensemble support, en particulier flotteur. La rotation de l'enveloppe est avantageusement suffisante pour amener le divergent de sortie à un niveau situé au-dessus du niveau du barrage, permettant ainsi d'éloigner ou de retirer l'équipage ou unité loin du barrage, en évitant que le divergent ne bute sur le barrage. Une telle unité permet un placement et/ou un déplacement aisé du divergent pour des barrages comportant une ou des passerelles, tout en évitant des problèmes d'étanchéité.

Pour faciliter le placement de l'unité, l'enveloppe comporte un tronçon sensiblement droit et un divergent de sortie relié à pivotement audit tronçon sensiblement droit. Le divergent peut ainsi pivoter entre une position sensiblement horizontale et une position inclinée de travail.

Selon une forme de réalisation, l'enveloppe est associée à un système pour créer un vide dans le canal pour remplir le canal d'eau et pour amorcer le siphon entre l'entrée et la sortie du canal, et à une vanne permettant l'admission d'air pour arrêter le siphon entre l'entrée et la sortie du canal. Par exemple, l'enveloppe comporte une connexion apte à être relié à un système mobile pour créer un vide dans le canal. Un tel système mobile peut alors être utilisé pour créer le vide dans des canaux de plusieurs unités, par exemple placées à un même barrage. Eventuellement, un même système central pour créer un vide peut être utilisé pour créer un vide dans des canaux de plusieurs unités.

Pour assurer un arrêt de fonctionnement de l'unité, en particulier un arrêt progressif de l'unité, la conduite d'admission d'air est munie d'une ouverture contrôlée, par exemple par une vanne. Lors de l'ouverture de la vanne, de par la dépression, de l'air entre dans le canal de l'enveloppe, de sorte que la quantité d'eau passant dans le canal diminue progressivement, pour devenir nulle lorsque le niveau d'eau dans le canal vient à être inférieur au niveau inférieur du coude du canal.

Selon un détail d'une forme de réalisation, la turbine est montée sur un arbre qui traverse le canal, ledit arbre étant accouplé à un alternateur via un système de multiplication. De façon avantageuse, l'arbre traverse une partie de la conduite qui se trouve en dépression, telle que la partie haute ou supérieure du coude de la conduite. Ceci est avantageux car cette dépression empêche tout passage d'eau hors de la conduite au niveau du passage pour l'arbre.

L'invention a également pour objet un procédé de production d'énergie hydroélectrique, dans lequel on utilise une unité suivant l'invention.
L'invention a encore pour objet un procédé pour le placement d'une unité suivant l'invention dans une position stable lors de la production d'énergie hydroélectrique, ainsi que lors d'un désiphonnage brutal de l'enveloppe.

Des détails et particularités d'une forme de réalisation d'une unité suivant l'invention ressortiront de la description détaillée suivante dans laquelle il est fait référence aux dessins ci-annexés. Dans ces dessins :
- la figure 1 est vue schématique en coupe latérale d'une unité suivant l'invention en mode de fonctionnement,
- la figure 2 est une vue de dessus de l'unité de la figure 1,
- la figure 3 est une vue schématique de l'unité de la figure 1 après rotation du canal pour amener le divergent de sortie au-dessus du niveau du barrage,
- la figure 4 est une vue de dessus de l'unité de la figure 3,
- la figure 5 est une vue schématique en coupe latérale d'une autre unité suivant l'invention en mode de fonctionnement,
- la figure 6 est une vue de dessus de l'unité de la figure 5,
- la figure 6A est une vue d'une forme de réalisation similaire à celle de la figure 6, mais comportant deux turbines,
- la figure 7 est une vue schématique en coupe latérale de l'unité de la figure 5 avec le divergent en position relevée,
- la figure 8 est une vue en coupe de l'unité de la figure 7 selon la ligne VIII-VIII, et
- la figure 9 est une vue en coupe de l'unité de la figure 7 selon la ligne IX-IX..

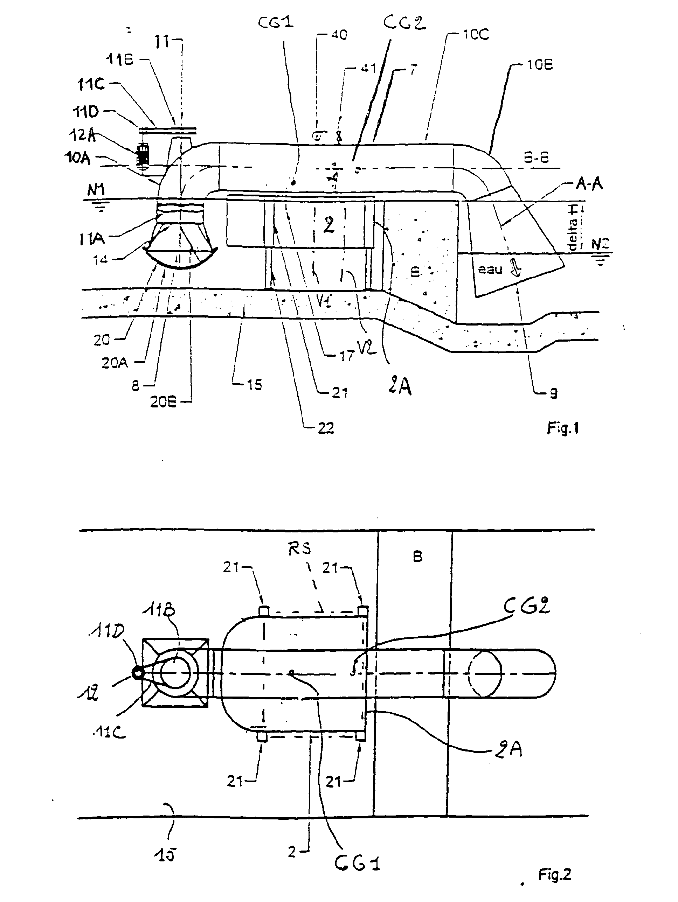

Les unités hydrauliques flottantes montrées aux figures 1, 5 et 6A sont destinées à produire de l'énergie hydroélectrique à partir d'une énergie au moins potentielle créée par un barrage (B) sur un cours d'eau créant une différence de niveaux (delta H) de moins de 5 mètres entre le niveau supérieur du côté amont (N1) du cours d'eau par rapport au barrage (B) et le niveau supérieur du côté aval (N2)du cours d'eau par rapport au barrage, le niveau supérieur aval N2 étant situé en dessous du niveau supérieur amont N1.

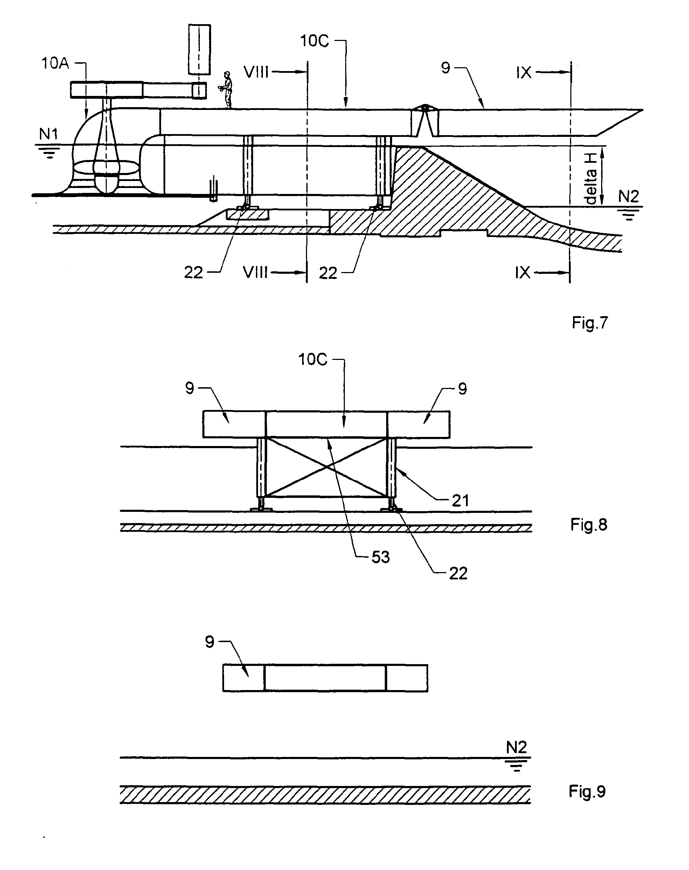

L'unité de la figure 1 ou 5 ou 6A comprend :
- un flotteur amont 2 avec une extrémité 2A destinée à être dirigée vers le barrage B;
- une enveloppe ou conduite 7 définissant un canal pour le passage d'eau entre une entrée 8 et une sortie évasée 9 (en particulier pour réduire la vitesse d'eau à la sortie à moins de 1,7m/s, en particulier à moins de 1,5m/s), ledit canal 7 présentant un axe central A-A correspondant au moins sensiblement à la direction d'écoulement d'eau (flèche EAU) dans le canal, ledit canal présentant en outre deux coudes 10A,10B aux extrémités d'un tronçon sensiblement horizontal 10C du canal 7, lesdits coudes servant à relier ce tronçon sensiblement horizontal 10C au tronçon d'entrée sensiblement vertical 8 et au divergent de sortie 9, ledit tronçon sensiblement horizontal 10C étant situé au-dessus du niveau supérieur amont N1;
- un arbre rotatif vertical 11 (vertical en position de fonctionnement de l'unité) par rapport à l'enveloppe 7, ledit arbre étant rotatif par rapport à l'axe du canal et étant muni d'une roue de turbine à aubages fixes et/ou orientables 11A;
- un système d'entraînement/multiplicateur/alternateur 12 (par exemple poulie 11B montée sur l'arbre rotatif 11 à l'extérieur de l'enveloppe 7, une courroie plate ou trapézoïdale 11C reliant la poulie 11B à la poulie 11D qui est couplée à l'alternateur 12A éventuellement muni d'un dispositif multiplicateur) ;
- un distributeur 14 pour guider l'eau vers la turbine 11A, ledit distributeur 14 comportant alors un organe recevant une extrémité de l'arbre 11 ;
- un dégrilleur 20 comportant un élément filtrant 20A (par exemple avec des barres ou plats) dont la forme suit une portion sensiblement cylindrique ou circulaire et un élément ou bras mobile 20B raclant l'élément filtrant 20A (le mouvement de va-et-vient de l'élément mobile étant engendré par un moteur non représenté), ledit élément mobile servant à retirer des débris arrêtés par l'élément filtrant (dans le cas de la forme de la figure 7, l'axe de rotation du bras est éloigné de l'entrée 8).

La turbine 11A est située au voisinage de l'entrée 8 du canal 7 placée du côté amont du barrage. En position de fonctionnement, la turbine 11A est située sous le niveau d'eau amont N1 du barrage ou sensiblement proche du niveau amont N1, voire légèrement au-dessus.

Le flotteur 2 comporte sensiblement à chacun de ses coins un vérin 21 dont la tige 22 est destinée à former un appui sur l'assiette inférieure 15 du barrage. Le flotteur 2 est adapté pour reprendre le poids du canal 7, de la turbine, de l'alternateur et des vérins (les pieds étant en position repliée ou relevée), lorsque le canal 7 n'est pas rempli d'eau. Ceci permet ainsi de déplacer par flottaison l'unité vers le barrage. Une fois l'unité placée à la distance requise du barrage B, les pieds 22 des vérins sont descendus vers l'assiette du barrage 15 pour former des appuis. Les vérins 21 sont alors activés pour surélever légèrement le flotteur 2, de sorte que les pieds reprennent un poids correspondant à un volume d'eau égal au volume de l'unité sorti de l'eau lors de la surélévation, de manière à éviter des mouvements de l'unité lors du siphonnage ou désiphonnage du canal (remplissage ou vidange du canal).

Les pieds 22 définissent un rectangle de sustentation (RS) montré en traits interrompus.

La projection verticale du centre de gravité CG1 de l'ensemble formé par le canal 7 non rempli d'eau, l'arbre 11 et la turbine, ainsi que la projection verticale du centre de gravité CG2 du canal rempli d'eau sont situées dans la base de sustentation RS. Ceci assure ainsi une excellente stabilité de l'unité en fonctionnement et en non-fonctionnement.

Le canal 7 présente un premier tronçon comportant le coude 10A et l'entrée 8 placé en porte à faux par rapport au flotteur 2, et un deuxième tronçon comportant le divergent 9, le coude 10B et une partie du tronçon horizontal 10C également placé en porte à faux par rapport au flotteur 2. Le premier tronçon en porte à faux rempli d'eau permet ainsi un certain équilibrage du poids du deuxième tronçon rempli d'eau.

Pour l'amorçage du canal, une pompe à vide 40 génère une succion de l'air présent dans le canal 7, cette succion aspirant de l'eau dans le canal, essentiellement par l'entrée 8. Pour l'arrêt de fonctionnement de l'unité, le canal 7 est muni d'une vanne 41 de mise à l'air sur son tronçon 10C. Par l'ouverture de cette vanne, de l'air est amené dans le canal 7 et permet ainsi un désiphonnage du canal en quelques secondes.

La vanne 41 permet donc de vider le canal 7.

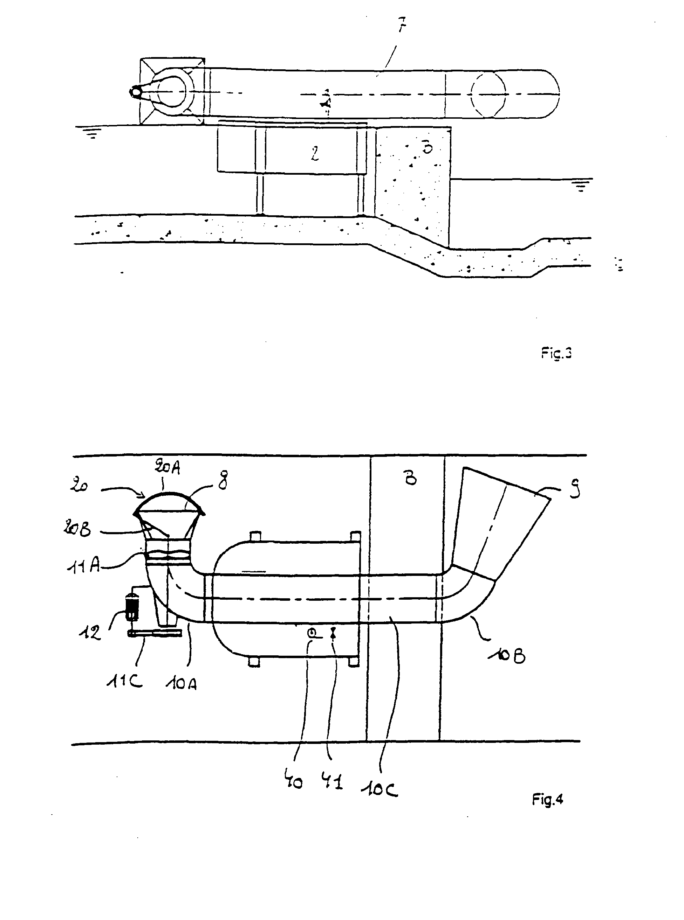

Dans la forme de réalisation de la figure 1, la conduite 7 (éventuellement uniquement une partie de celle-ci, par exemple la partie solidaire du divergent 9) est montée à rotation par rapport à un axe horizontal B-B correspondant à l'axe du tronçon horizontal 10C du canal. La conduite 7 est attachée au flotteur 2 par un dispositif permettant le pivotement du canal 7 (entrée 8 et divergent 9 compris) avec le rotor et l'alternateur par rapport au flotteur 2 et le maintien en position pivotée du canal 7 (position représentée aux figures 3 et 4). Le pivotement du canal 7 permet de placer l'entrée 8 et le divergent 9 à un niveau supérieur au niveau de flottaison et permet ainsi un placement aisé du divergent 9 du côté aval du barrage B. Une fois le divergent 9 placé au-dessus du côté aval du barrage, le canal 7 est pivoté de manière à amener le divergent 9 dans l'eau côté aval de la rivière et l'entrée 8 dans l'eau côté amont de la rivière. Ce pivotement est effectué de préférence après la pose des pieds 22 des vérins 21.

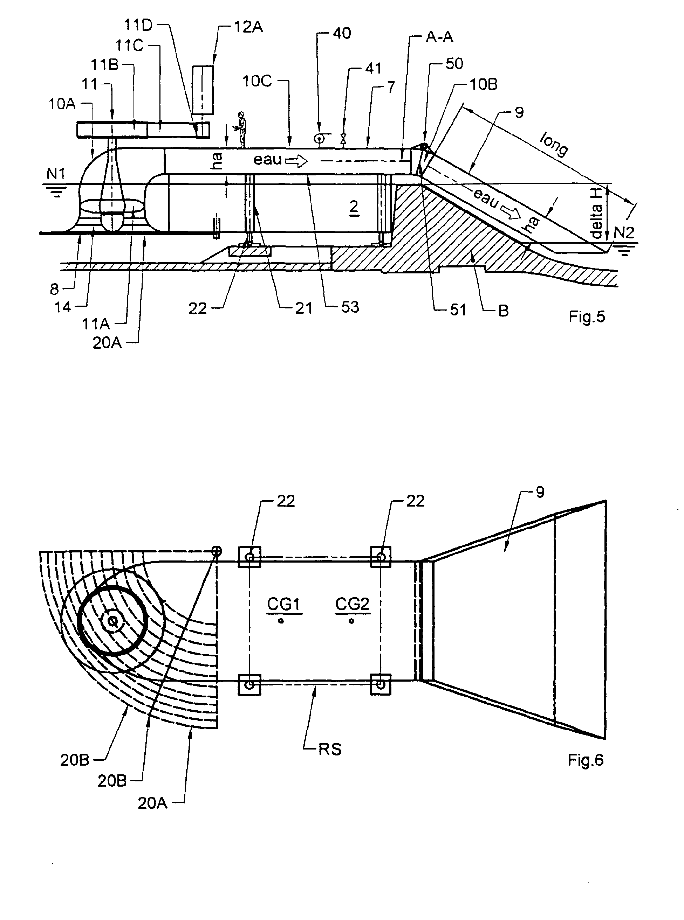

Dans la forme de réalisation de la figure 5, le divergent 9 est articulé à la partie sensiblement droite 10C de la conduite. Des vérins 50 permettent de placer le divergent 9 dans une position inclinée ou de fonctionnement (figure 5), ou dans une position de non-fonctionnement, dans laquelle le divergent 9 s'étend sensiblement dans le prolongement de la partie droite 10C. (figure 7) En position de fonctionnement, le divergent 9 est pivoté vers le bas de manière à ce que son bord tourné vers la partie droite 10C écrase un joint 51 situé au niveau du coude 10B.

La partie centrale 10 C a une section transversale sensiblement rectangulaire (figure 8), le fond de ladite partie étant directement attaché sur la paroi supérieure 53 du flotteur 2.
Le divergent 9 présente également une section transversale sensiblement rectangulaire (figure 9) s'élargissant vers l'extrémité de sortie. La hauteur « ha » du divergent 9 correspond à la hauteur « ha » de la partie centrale 10C.
L'angle d'élargissement de la section de passage et la longueur « long » du divergent seront choisis pour assurer une vitesse de sortie d'eau hors du divergent de moins de 2m/s, par exemple de 1 à 1,7 m/s.

En position de fonctionnement, le divergent s'étend dans une direction inclinée par rapport à la direction de la partie centrale 10C. L'angle β formé entre la partie centrale 10C et le divergent est par exemple compris entre 90° et 160°. Le plan médian (non vertical) du divergent forme avantageusement un angle entre 20° et 90° par rapport à un plan horizontal.

Pour l'amorçage du canal, une pompe à vide 40 génère une succion de l'air présent dans le canal 7, cette succion aspirant de l'eau dans le canal, essentiellement par l'entrée 8. Pour l'arrêt de fonctionnement de l'unité, le canal 7 est muni d'une vanne 41 de mise à l'air sur son tronçon 10C. Par l'ouverture de cette vanne, de l'air est amené dans le canal 7 et permet ainsi un désiphonnage du canal en quelques secondes.

Le placement de l'unité 1 en position de fonctionnement par rapport au barrage B peut s'opérer comme suit :
- on place l'unité avec la conduite 7 en position pivotée (figures 3 et 4 - l'entrée 8 et le divergent 9 s'étendant dans un plan sensiblement horizontal au-dessus du flotteur 2 ou figure 7 - le divergent étant en position sensiblement horizontale) dans la partie amont du barrage ;
- on déplace par flottaison l'unité jusqu'au voisinage du barrage de manière à ce que le divergent 9 soit au-dessus de la partie aval du barrage;
- lorsque l'unité est au voisinage du barrage, on descend les pieds 22 pour qu'ils touchent le fond adjacent du barrage et on active les vérins 21 pour surélever l'unité (par exemple de 5 à 25cm, en particulier de 5 à 15 cm), de manière à ce que cette dernière ne soit plus libre de se déplacer par flottaison. Les pieds permettent ainsi de maintenir une assiette parfaitement identique. qu'il y ait de l'eau ou non dans la conduite 7 ;
- On pivote la conduite 7 ou le divergent 9 de manière à ce que le divergent 9 plonge dans l'eau située côté aval du barrage, tandis que l'entrée 8 plonge dans l'eau située côté amont du barrage ;
- on fait tourner la pompe à vide 40 de manière à créer un vide dans le canal 7. Ceci entraîne la création d'une dépression dans le canal 7, de sorte que de l'eau entre dans la conduite 7 essentiellement par l'entrée 8. Lorsque le canal 7 est sensiblement rempli d'eau, la pompe à vide est désactivée et l'effet de siphon est amorcé. L'unité est alors en position de fonctionnement pour produire de l'énergie électrique.
- Pour arrêter la production d'énergie électrique et donc pour interrompre le passage d'eau dans la conduite 7 entre son entrée 8 et sa sortie 9, on ouvre la vanne 41 pour permettre l'introduction d'air dans le canal 7. Cet air s'accumule alors dans le tronçon horizontal 10C, jusqu'à vider complètement le conduit 7 jusqu'aux niveaux amont et aval respectivement.
- Si l'unité doit être déplacée ou éloignée du barrage, on pivote alors le canal 7 ou le divergent 9 de manière à amener le divergent 9 dans la position lui permettant de franchir le barrage vers l'amont, sans heurter le barrage B. On abaisse l'unité par rapport au fond du barrage par déplacement des pieds (par exemple au moyen des vérins), éventuellement après avoir ajouté un ou plusieurs flotteurs supplémentaires. Les pieds sont ensuite déplacés pour ne plus prendre appui sur le fond du barrage, de manière à permettre un déplacement par flottaison de l'unité, par exemple vers une berge, en amont du barrage.

L'unité hydraulique représentée aux figures est de conception simple, maniable, de fonctionnement aisé, etc., mais surtout ne nécessite la construction d'aucun ouvrage d'art particulier, puisqu'elle s'adapte aux barrages existants.

Plus de quatre pieds pourraient être utilisés pour accroître la stabilité. Par exemple le nombre de pieds sera de 5, 7, 9, voire plus.
Le divergent 9 peut avoir une autre forme, telle qu'une forme sensiblement conique ou une forme moins allongée que celle de la figure 1 (divergent s'étendant le long du barrage). Pour de telles formes de réalisation, une rotation de plus de 90° (par exemple de 120° ou de 130°) peut être nécessaire pour amener le divergent 9 à un niveau situé au-dessus du niveau du barrage.

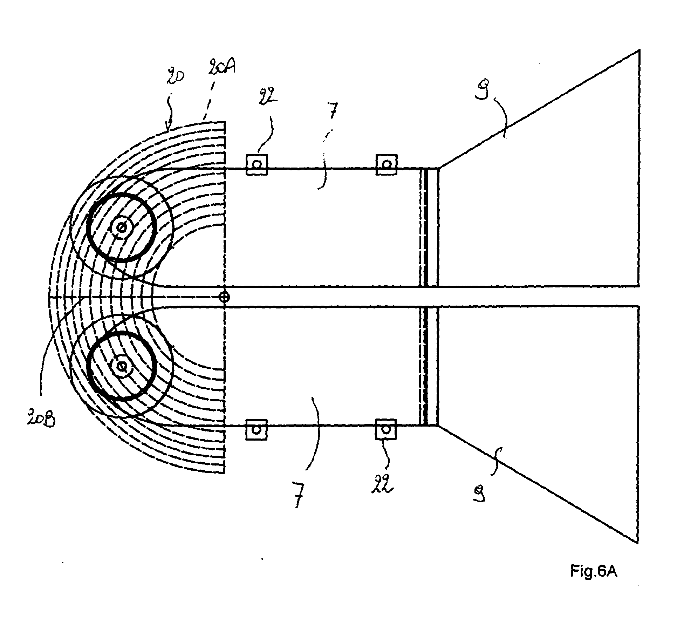

Il est possible de placer plusieurs unités suivant l'invention l'une à côté de l'autre. Lorsque l'on place deux unités selon la figure 5, l'une à côté de l'autre, il est possible d'utiliser un dégrilleur sensiblement hémi-circulaire, avec un seul bras pour chasser les matières solides retenues par le dégrilleur dans une zone éloignée de la zone d'aspiration d'eau dans les canaux 7 des unités. Pour avoir la forme la plus compacte, le divergent de chaque unité peut être adapté pour qu'une face latérale verticale du divergent d'une unité soit adjacente et parallèle à une face latérale verticale du divergent de l'unité adjacente (voir figure 6A).

Les vérins 21 peuvent être adaptés ou contrôlés pour assurer un delta H sensiblement constant entre l'amont et l'aval, par exemple en cas de légère augmentation du niveau d'eau dans le côté amont du barrage.

Selon une forme de réalisation possible, l'enveloppe forme l'ensemble support ou une partie de celui-ci, un ou des pieds étant montés directement sur l'enveloppe ou via une structure intermédiaire.

## Revendications

1. Unité hydraulique mobile flottante ou apte à être flottante, pour générer une énergie hydroélectrique à partir d'une énergie au moins potentielle créée par un barrage (B) sur un cours d'eau créant une différence de niveaux (delta H) de moins de 8 mètres entre le niveau supérieur du côté amont du cours d'eau par rapport au barrage et le niveau supérieur du côté aval du cours d'eau par rapport au barrage, le niveau supérieur aval étant situé en dessous du niveau supérieur amont, cette unité comprenant :
- au moins un ensemble support amont (2) flottant ou apte à être rendu flottant et destiné à être placé du côté amont du barrage, ledit support présentant une extrémité (2A) destinée à être dirigée vers le barrage (B) et au moins un moyen d'appui (22) destiné à prendre appui sur le fond du cours d'eau côté amont et définissant une base de sustentation sur le fond;
- une enveloppe (7) définissant un canal pour le passage d'eau entre une entrée (8) et une sortie (9), ledit canal présentant un axe (A-A) correspondant au moins sensiblement à la direction d'écoulement d'eau dans le canal, ledit canal présentant en outre un coude adapté pour être situé au-dessus du niveau supérieur amont ;
- un arbre rotatif (11) par rapport à l'enveloppe, ledit arbre rotatif étant destiné à entraîner un alternateur; et
- une turbine (11A) montée sur l'arbre rotatif (11), ladite turbine étant avantageusement située au voisinage de l'entrée du canal destinée à être placée du côté amont du barrage,
ladite enveloppe (7), l'arbre rotatif (11) et la turbine (11A) formant un ensemble présentant un premier centre de gravité (CG1) lorsque l'enveloppe (7) n'est pas remplie d'eau et un deuxième centre de gravité (CG2) lorsque l'enveloppe (7) est remplie d'eau,
**caractérisée en ce qu'**au moins la projection verticale du deuxième centre de gravité (CG2) de l'ensemble formé par l'enveloppe (7), l'arbre rotatif (11) et la turbine (11A) est située au moins sensiblement dans la base de sustentation de l'unité, de préférence dans la base de sustentation de l'unité.

2. Unité selon la revendication 1, **caractérisée** en ce la projection verticale sur le fond du premier centre de gravité (CG1) et la projection verticale sur le fond du deuxième centre de gravité (CG2) de l'ensemble formé par l'enveloppe (7), l'arbre rotatif (11) et la turbine (11A) sont situées dans la base de sustentation de l'unité.

3. Unité suivant la revendication 1 ou 2, **caractérisée en ce que** l'unité ne comporte pas de réservoir d'appoint destiné à recevoir un liquide pour assurer l'équilibre de l'unité avec l'enveloppe remplie d'eau.

4. Unité selon l'une quelconque des revendications 1 à 3, **caractérisée en ce que** la projection verticale de l'entrée (8) de l'enveloppe et la projection verticale de la sortie (9) sont situées hors de la base de sustentation définie par au moins trois pieds, de préférence quatre pieds situés en amont du barrage et situés entre l'entrée (8) et la sortie (9)..

5. Unité suivant l'une quelconque des revendications précédentes , **caractérisée en ce que** le moyen d'appui (21,22) est associé à ou est apte à être associé à un moyen apte à soulever au moins l'ensemble support avec le canal (7) non rempli d'eau, de préférence l'ensemble support avec le canal (7) rempli d'eau, et apte à supporter l'ensemble support avec le canal (7) rempli d'eau.

6. Unité suivant l'une quelconque des revendications précédentes, **caractérisée en ce que** l'enveloppe comporte un tronçon de canal sensiblement horizontal (10C) auquel sont attachés un divergent de sortie (9) et une entrée (8), ladite enveloppe (7) étant montée rotative autour d'un axe sensiblement horizontal parallèle ou correspondant à l'axe du tronçon sensiblement horizontal (10C), de manière à permettre. après rotation, d'amener le divergent au-dessus du niveau du barrage (B).

7. Unité suivant l'une quelconque des revendications 1 à 5, **caractérisée en ce que** le divergent est monté à pivotement par rapport à l'enveloppe.

8. Procédé de production d'énergie hydroélectrique, dans lequel on utilise une unité suivant l'une quelconque des revendications précédentes.

9. Procédé pour le placement d'une unité suivant l'une quelconque des revendications 1 à 6 dans la partie amont d'un barrage pour la production d'énergie électrique, dans lequel on soulève l'unité flottante avec l'enveloppe avantageusement non remplie d'eau d'au moins 1cm, avantageusement de 2 à 20cm, de préférence de 3 à 10cm, pour assurer une stabilité de l'unité lors de la production d'énergie électrique, ainsi que lors d'un désiphonnage brutal du canal.
